# EUROPÄISCHE PATENTANMELDUNG

(11) **EP 3 809 560 A1**
(43) Veröffentlichungstag der Anmeldung: **21.04.2021**
(21) Anmeldenummer: 19203668.9
(22) Anmeldetag: 16.10.2019
(51) Int. Cl.: H02K 1/02, H02K 1/06, H02K 1/24, H02K 15/02

(54) **ROTORBLECH, VERFAHREN ZUR FERTIGUNG EINES ROTORBLECHS UND ELEKTRISCHE MASCHINE**

(71) Anmelder: Siemens Aktiengesellschaft, 80333 München (DE)
(72) Erfinder: Schuh, Carsten, 85598 Baldham (DE)

(57) **Zusammenfassung**

Das Rotorblech ist mit einem ersten Material und einem zweiten Material gebildet, wobei das erste Material zumindest teilweise weichmagnetisch ist und das zweite Material eine höhere mechanische Zugfestigkeit aufweist als das erste Material, wobei das erste und das zweite Material kogesintert sind.

Bei dem Verfahren zur Fertigung eines solchen Rotorblechs werden erstes und zweites Material kogesintert.
Die elektrische Maschine ist insbesondere ein Motor und/oder Generator und weist mindestens ein solches Rotorblech auf.

## Beschreibung

Die Erfindung betrifft ein Rotorblech, ein Verfahren zur Fertigung eines Rotorblechs sowie eine elektrische Maschine.

Magnetbleche für elektrische Maschinen können nunmehr mittels Siebdrucks und/oder Schablonendrucks gefertigt werden. Dabei wird zunächst ein Metallpulver zu einer Druckpaste verarbeitet, und diese Druckpaste dann mittels Sieb- und/oder Schablonendrucks zu einem Grünkörper, d.h. zu einer Dickschicht, verarbeitet. Der Grünkörper wird anschließend mittels thermischer Behandlung, d.h. mittels Entbinderung und Sinterung, zu einem strukturierten metallischen Blech gesintert.

Insbesondere Magnetbleche aus Rein-Eisen lassen sich auf diese Weise einfach fertigen. Für Magnetbleche in Form von Rotorblechen jedoch, welche bei hohen Solldrehzahlen eingesetzt werden sollen und/oder welche bei sich stark ändernden Drehzahlen betrieben werden sollen, sind die mechanischen Eigenschaften von Rein-Eisen nicht ausreichend. Insbesondere ist die Zugfestigkeit von Rein-Eisen häufig nicht ausreichend, um den auftretenden Fliehkräften und sonstigen Beschleunigungskräften standzuhalten.

Gleichwohl sind die weichmagnetischen Eigenschaften von Rein-Eisen besonders gut im Vergleich zu alternativen Materialien. Es ist daher Aufgabe der Erfindung, ein verbessertes Rotorblech zu schaffen, welches insbesondere hohen Drehzahlen und starken Drehzahländerungen standhält, als auch hinreichend gute magnetische Eigenschaften aufweist.

Diese Aufgabe der Erfindung wird mit einem Rotorblech mit den in Anspruch 1 angegebenen Merkmalen sowie mit einem Verfahren zur Fertigung eines Rotorblechs mit den in Anspruch 8 angegebenen Merkmalen sowie mit einer elektrischen Maschine mit den in Anspruch 13 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße Rotorblech weist zumindest ein erstes Material und ein zweites Material auf, bei welchem das erste Material zumindest teilweise weichmagnetisch ist und das zweite Material eine höhere mechanische Zugfestigkeit aufweist als das erste Material, wobei das erste und das zweite Material stoffschlüssig miteinander verbunden, insbesondere gemeinsam gesintert, sind. Unter dem Begriff gemeinsam gesintert ist zweckmäßig kogesintert zu verstehen. Auf diese Weise ist das erfindungsgemäße Rotorblech vorteilhaft ein Sinterzeug, welches sowohl eine hinreichend hohe mechanische Zugfestigkeit aufweist, um zuverlässig hohen Rotordrehzahlen zu widerstehen, und zudem hinreichend gute weichmagnetische Eigenschaften aufweist um ein Rotorblech zu fertigen, welches in einer hochperformanten elektrischen Maschine einsetzbar ist. Das erfindungsgemäße Rotorblech kann vorteilhaft mit einer breiten Auswahl von magnetisch aktiven Materialien für das erste Material und/oder von mechanisch stabilisierenden Materialien für das zweite Material gebildet sein. Zudem besteht eine große Freiheit für die Formgebung für das erste Material und das zweite Material. Vorteilhaft lässt sich das erfindungsgemäße Rotorblech zudem strukturkonform ausbilden, d.h. eine nennenswerte Verringerung des ersten weichmagnetischen Materials im Vergleich mit konventionellen Rotorblechen ist erfindungsgemäß nicht erforderlich.

Vorzugsweise umfasst bei dem erfindungsgemäßen Rotorblech das erste Material Rein-Eisen und/oder das zweite Material umfasst einen Stahl. Vorteilhaft weist Stahl eine besonders große mechanische Zugfestigkeit aus. Rein-Eisen ist vorteilhaft weichmagnetisch.

Bei dem erfindungsgemäßen Rotorblech weichen das erste Material und das zweite Material zweckmäßig in ihren thermischen Ausdehnungskoeffizienten um höchstens 10 · 10⁻⁶/K, vorzugsweise um höchstens 5 · 10⁻⁶/K, geeigneterweise um höchstens 2 · 10⁻⁶/K, idealerweise um höchstens 1 · 10⁻⁶/K, voneinander ab. Auf diese Weise ist die Stabilität der mechanischen Fügung sowohl beim Sintern selbst als auch im Betrieb gewährleistet.

Bei dem erfindungsgemäßen Rotorblech sind erstes und zweites Material vorzugsweise miteinander formschlüssig verbunden. In dieser Weiterbildung ist die Verbindung von erstem und zweitem Material mittels der formschlüssigen Verbindung zusätzlich stabilisiert.

Das erfindungsgemäße Rotorblech weist vorzugsweise eine kreisförmige Geometrie und/oder eine Drehsymmetrie auf und das zweite Material bildet bevorzugt radial verlaufende Streben, welche sich insbesondere an einem radial außenliegenden Ende in radialer Richtung verjüngen.

Zusätzlich oder alternativ nimmt das zweite Material einen geringeren Masse- und/oder Volumenanteil ein als das erste Material. In dieser Weiterbildung sind die magnetischen Eigenschaften des Rotorblechs vorteilhaft überwiegend durch das erste Material dominiert, während das zweite Material auf einen zur mechanischen Stabilität hinreichenden Volumen- oder Masseanteil beschränkt sein kann.

Bei dem erfindungsgemäßen Rotorblech weist das erste Material vorzugsweise Nuten auf, innerhalb welcher das zweite Material befindlich ist. Vorteilhaft schließen erstes und zweites Material oberflächlich eben ab.

Geeignet ist bei dem erfindungsgemäßen Rotorblech das zweite Material beiderseits des ersten Materials angeordnet. Bei dem erfindungsgemäßen Verfahren zur Fertigung eines erfindungsgemäßen Rotorblechs wie zuvor beschrieben werden erstes und zweites Material kogesintert.

Vorteilhaft wird bei dem Verfahren gemäß der Erfindung zunächst das erste Material als Grünteil gefertigt und nachfolgend wird das zweite Material an das erste Material gebracht und nachfolgend werden erstes und zweites Material kogesintert. Alternativ und ebenfalls vorteilhaft wird zunächst das zweite Material als Grünteil gefertigt und nachfolgend wird das erste Material an das zweite Material gebracht und nachfolgend werden erstes und zweites Material kogesintert.

Bei dem erfindungsgemäßen Verfahren werden in einer zweckmäßigen Weiterbildung zunächst das erste Material als Grünteil gefertigt und das zweite Material als Grünteil gefertigt, danach erstes und zweites Material formschlüssig miteinander verbunden, insbesondere laminiert, und anschließend werden erstes und zweites Material kogesintert. In dieser Weiterbildung können erstes und zweites Material jeweils als Grünteil vorgefertigt sein, sodass eine besonders hohe Freiheit in der Formgebung besteht.

Vorzugsweise wird oder werden bei dem erfindungsgemäßen Verfahren das oder die Grünteile mittels Tape-Casting und/oder mittels Sieb- und/oder Schablonendruck und/oder mittels Schlickerguss und/oder mittels Stanzen und/oder Wasserstrahlschneiden und/oder Heißprägen und/oder Binder Jetting und/oder mittels additiver Fertigung gefertigt. Das oder die vorgenannten Fertigungsverfahren sind vorteilhaft zur Bereitstellung von Grünteilen bekannt, sodass zur Durchführung des erfindungsgemäßen Verfahrens grundsätzlich so weit wie möglich auf konventionelle Fertigungsverfahren zurückgegriffen werden kann. Vorteilhaft ist das erfindungsgemäße Verfahren kostengünstig und großserienfähig durchführbar.

Bevorzugt wird bei dem Verfahren gemäß der Erfindung ein Material aus der Gruppe von erstem und zweitem Material an ein weiteres Material der Gruppe von erstem und zweitem Material mittels Tape-Casting und/oder mittels Sieb- und/oder Schablonendruck und/oder mittels Schlickerguss und/oder mittels Stanzen und/oder Wasserstrahlschneiden und/oder Heißprägen und/oder Binder Jetting und/oder mittels additiver Fertigung und/oder mittels Sprühen und/oder Walzbeschichten gebracht.

Die erfindungsgemäße elektrische Maschine ist insbesondere ein Motor und/oder Generator und weist ein erfindungsgemäßes Rotorblech wie zuvor beschrieben und/oder ein mittels eines erfindungsgemäßen Verfahrens wie zuvor beschrieben hergestelltes Rotorblech auf.

Nachfolgend wird die Erfindung anhand in der Zeichnung dargestellter Ausführungsbeispiele näher erläutert. Es zeigen:
- Fig. 1: ein erfindungsgemäß gefertigtes erfindungsgemäßes Rotorblech mit einem ersten und einem zweiten Material schematisch in einer Draufsicht,
- Fig. 2: das erfindungsgemäße Rotorblech gemäß Fig. 1 schematisch im Querschnitt,
- Fig. 3: ein weiteres Ausführungsbeispiel eines erfindungsgemäß gefertigten erfindungsgemäßen Rotorblechs schematisch in einer Draufsicht,
- Fig. 4: ein weiteres Ausführungsbeispiel eines erfindungsgemäß gefertigten erfindungsgemäßen Rotorblechs schematisch in einer Draufsicht, sowie
- Fig. 5: ein weiteres Ausführungsbeispiel eines erfindungsgemäß gefertigten erfindungsgemäßen Rotorblechs schematisch in einer Draufsicht.

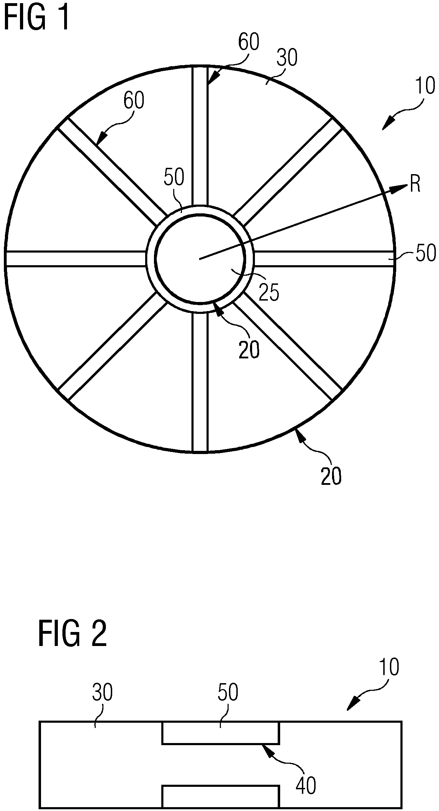

Das in Fig. 1 gezeigte erfindungsgemäße Rotorblech 10 weist eine im wesentlichen kreisringförmige Querschnittskontur 20 auf und bildet einen mathematischen senkrechten Zylinder mit kreisringförmiger Grundfläche. Der äußere Radius der kreisringförmigen Grundfläche ist mindestens eine Größenordnung größer als die Dicke des Zylinders. Das Rotorblech 10 weist eine zentrale Durchführung 25 auf, welche in Richtung einer Zylinderachse der kreisring-zylindrischen Gestalt des Rotorblechs 10 durch dieses hindurchführt. Die Durchführung 25 ist zur Durchführung einer Rotorwelle ausgebildet, an welche das Rotorblech 10 anbindbar ist.

Das Rotorblech 10 umfasst ein erstes Material 30, welches mit weichmagnetischem Rein-Eisen gebildet ist. Das erste Material 30 weist an seinen beiden voneinander abgewandten kreisringförmigen Seiten jeweils Nuten 40 auf, innerhalb welcher ein zweites Material 50 befindlich ist. Das zweite Material 50 ist im dargestellten Ausführungsbeispiel aus Stahl gebildet, welcher eine deutlich höhere mechanische Zugfestigkeit als Rein-Eisen aufweist. Dabei schließt das zweite Material 50 mit dem ersten Material 30 an den kreisförmigen Seiten des Rotorblechs 10 eben und bündig ab.

Das zweite Material 50 des erfindungsgemäßen Rotorblechs 10 umgibt die Durchführung 25 zum einen kreisringförmig und streckt sich zudem von der Durchführung 25 mit acht Speichen 60 sternartig radial bis zum äußeren Kreisumfang der kreisringförmigen Querschnittskontur 20 fort. Grundsätzlich kann in weiteren, nicht eigens dargestellten Ausführungsbeispielen auch jeweils eine andere Zahl von Speichen vorhanden sein.

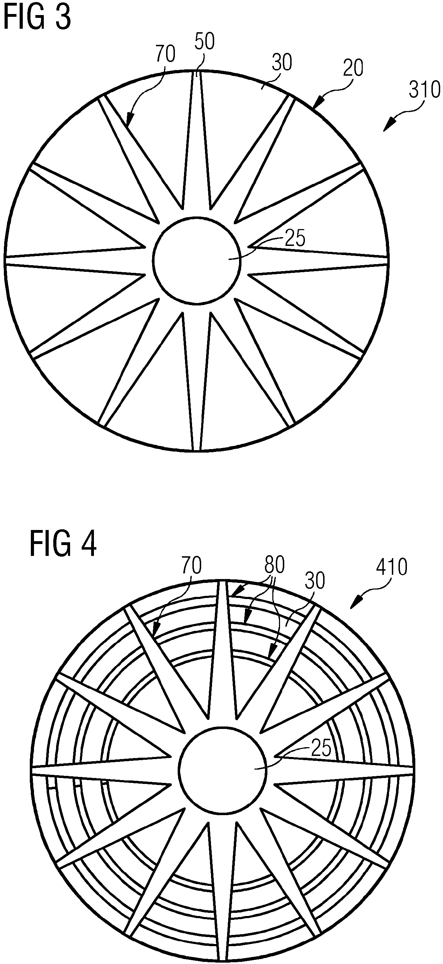

Im in Fig. 1 dargestellten Ausführungsbeispiel erstrecken sich die mit zweitem Material 50 gebildeten Speichen 60 mit einer konstanten Breite in Richtung senkrecht zur radialen Richtung R und parallel zu den kreisringförmigen Seiten des Rotorblechs 10. Im in Fig. 3 dargestellten Ausführungsbeispiel eines Rotorblechs 310 können sich die Speichen 70 auch in radialer Richtung verjüngen.

Im in Fig. 4 dargestellten Ausführungsbeispiel eines Rotorblechs 410 sind zusätzlich zu den sich in radialer Richtung R verjüngenden Speichen 70 wie in Fig. 3 dargestellt auch mehrere, in der Darstellung gem. Fig. 4 drei, konzentrische Ringe 80 aus zweitem Material vorhanden, welche ebenfalls in Nuten 40 des ersten Materials 30 befindlich sind. Erfindungsgemäß werden die in den Figuren 1 bis 4 dargestellten Rotorbleche 10, 310, 410 hergestellt, indem zunächst das erste Material 30 mittels Sieb- und/oder Schablonendrucks als Grünteil gefertigt wird. Dabei wird mit dem ersten Material 30 das Grünteil derart ausgebildet, dass dieses Nuten 40 aufweist. Anschließend wird in diese Nuten 40 das zweite Material 50 mittels Sprühens eingebracht. Nachfolgend werden das erste Material 30 und das zweite Material 50 gemeinsam gesintert.

Grundsätzlich kann in weiteren, nicht eigens dargestellten Ausführungsbeispielen das erste Material 30 mittels Tape-Casting und/oder mittels Schlickerguss und/oder mittels Stanzen und/oder Wasserstrahlschneiden und/oder Heißprägen und/oder Binder-Jetting und/oder mittels additiver Fertigung als Grünteil gefertigt werden.

In weiteren, nicht eigens dargestellten Ausführungsbeispielen kann das zweite Material 50 mittels Walzbeschichtens oder mittels eines der im vorhergehenden Absatz hinsichtlich des ersten Materials 30 genannten Fertigungsmethoden an das erste Material gebracht werden.

Grundsätzlich können in weiteren, nicht eigens dargestellten Ausführungsbeispielen das erste Material 30 sowie das zweite Material 50 jeweils als Grünteil gefertigt werden. Nachfolgend wird das zweite Material 50 in Nuten 40 des ersten Materials 30 eingebracht und erstes 30 und zweites Material 50 werden gemeinsam gesintert.

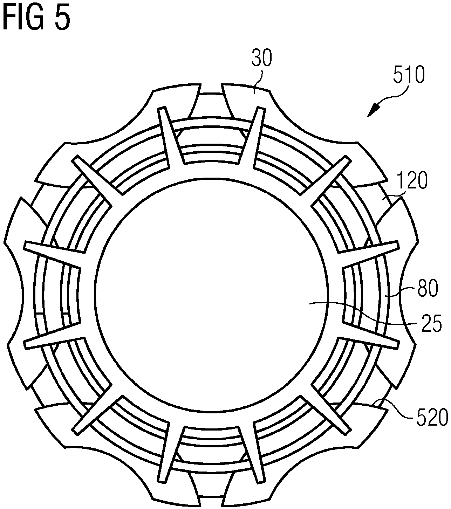

Bei dem in Fig. 5 dargestellten Ausführungsbeispiel ist neben dem ersten weichmagnetischen Material und dem zweiten Material mit einer höheren Zugfestigkeit des ersten Materials zusätzlich ein drittes Material 120 vorhanden, wobei das dritte Material 120 eine nichtmagnetische Tragstruktur des Rotorblechs 510 bildet. Das erste 30 und das dritte Material 120 bilden ein zweikomponentiges Magnetblech 520 aus, bei welchem das zweite Material 50 eine zusätzliche Stabilisierung des zweikomponentigen Magnetblechs 520 darstellt. Bei dem Rotorblech 510 tritt also das zweikomponentige Magnetblech 520 an die Stelle des ersten Materials 30 der zuvor beschriebenen Ausführungsbeispiele.

## Patentansprüche

1. Rotorblech (10, 310, 410, 510) mit mindestens einem ersten Material (30) und einem zweiten Material (50), bei welchem das erste Material (30) zumindest teilweise weichmagnetisch ist und das zweite Material (50) eine höhere mechanische Zugfestigkeit aufweist als das erste Material (30), wobei das erste (30) und das zweite Material (50) stoffschlüssig verbunden, insbesondere gemeinsam gesintert, sind.

2. Rotorblech (10, 310, 410, 510) nach Anspruch 1, bei welchem das erste Material (30) Rein-Eisen ist und/oder bei welchem das zweite Material (50) ein Stahl ist.

3. Rotorblech nach einem der vorhergehenden Ansprüche, bei welchem das erste Material (30) und das zweite Material (50) in ihren thermischen Ausdehnungskoeffizienten um höchstens 10 · 10-6/K, vorzugsweise um höchstens 5 · 10-6/K, geeigneterweise um höchstens 2 · 10-6/K, idealerweise um höchstens 1 · 10-6/K voneinander abweichen.

4. Rotorblech nach einem der vorhergehenden Ansprüche, bei welchem erstes (30) und zweites Material (50) miteinander formschlüssig verbunden sind.

5. Rotorblech(10, 310, 410, 510) nach einem der vorhergehenden Ansprüche, bei welchem das Rotorblech (10, 310, 410, 510) eine kreisförmige Geometrie und/oder eine Drehsymmetrie aufweist und das zweite Material radial verlaufende Streben (60, 70) bildet, welche sich insbesondere an einem radial außenliegenden Ende in radialer Richtung (R) verjüngen.

6. Rotorblech (10, 310, 410, 510) nach einem der vorhergehenden Ansprüche, bei welchem das erste Material (30) Nuten (40) aufweist, innerhalb welcher das zweite Material befindlich ist.

7. Rotorblech nach einem der vorhergehenden Ansprüche, bei welchem das zweite Material (50) beiderseits des ersten Materials (30) angeordnet ist.

8. Verfahren zur Fertigung eines Rotorblechs nach einem der vorhergehenden Ansprüche, bei welchem erstes (30) und zweites Material (50) stoffschlüssig miteinander verbunden, insbesondere kogesintert, werden.

9. Verfahren zur Fertigung nach dem vorherigen Anspruch, bei welchem zunächst das erste Material (30) als Grünteil gefertigt wird und nachfolgend das zweite Material (50) an das erste Material (30) gebracht wird und nachfolgend erstes (30) und zweites Material (50) kogesintert werden oder zunächst das zweite Material (50) als Grünteil gefertigt wird und nachfolgend das erste Material (30) an das zweite Material (50) gebracht wird und nachfolgend erstes (30) und zweites Material (50) kogesintert werden.

10. Verfahren nach einem der vorhergehenden Ansprüche, bei welchem zunächst das erste Material (30) als Grünteil gefertigt wird und das zweite Material (50) als Grünteil gefertigt wird, und danach erstes (30) und zweites Material (50) formschlüssig miteinander verbunden, insbesondere laminiert, und anschließend kogesintert werden.

11. Verfahren nach einem der vorhergehenden Ansprüche, bei welchem das oder die Grünteile mittels Tape-Casting und/oder mittels Sieb-und/oder Schablonendruck und/oder mittels Schlickerguss und/oder mittels Stanzen und/oder Wasserstrahlschneiden und/oder Heißprägen und/oder Binder Jetting und/oder mittels additiver Fertigung gefertigt wird.

12. Verfahren nach einem der vorhergehenden Ansprüche, bei welchem eines von erstem (30) und zweitem Material (50) an ein weiteres von erstem (30) und zweitem Material (50) mittels Tape-Casting und/oder mittels Sieb-und/oder Schablonendruck und/oder mittels Schlickerguss und/oder mittels Stanzens und/oder Wasserstrahlschneiden und/oder Heißprägen und/oder Binder Jetting und/oder mittels additiver Fertigung und/oder mittels Sprühen und/oder Walzbeschichten gebracht wird.

13. Elektrische Maschine, insbesondere Motor und/oder Generator, mit einem Rotorblech (10, 310, 410, 510) nach einem der vorhergehenden Ansprüche.
